# EUROPÄISCHE PATENTANMELDUNG

(11) **EP 1 772 621 A2**
(43) Veröffentlichungstag der Anmeldung: **11.04.2007**
(21) Anmeldenummer: 06018630.1
(22) Anmeldetag: 06.09.2006
(51) Int. Cl.: F03D 1/06

(54) **Verfahren zur Herstellung einer Durchführung in einem Faserverbundwerkstoff sowie Rotorblatt für eine Windenergieanlage mit einer Durchführung**

(30) Priorität: 06.10.2005 DE 102005047959
(71) Anmelder: NORDEX ENERGY GmbH, 22848 Norderstedt (DE)
(72) Erfinder: Nies, Daniel, Dipl.-Ing., 22297 Hamburg (DE)
(74) Vertreter: Hauck Patent- und Rechtsanwälte

(57) **Zusammenfassung**

Verfahren zur Herstellung einer Durchführung in einem Faserverbundwerkstoff für ein Rotorblatt, mit folgenden Verfahrensschritten:
- In einem Faserhalbzeug wird eine von Fasern freie Öffnung derart vorgesehen, daß die Fasern um die Öffnung herum verlaufen,
- das Faserhalbzeug wird durch die Zugabe eines Matrixwerkstoffs zu einem Faserverbundwerkstoff verarbeitet, und
- die Durchführung wird durch die Öffnung in dem Faserhalbzeug eingebracht.

## Beschreibung

Die vorliegende Erfindung betrifft ein Verfahren zur Herstellung einer Durchführung in einem Faserverbundwerkstoff für ein Rotorblatt. Sie betrifft ebenfalls ein Rotorblatt für eine Windenergieanlage mit einer Durchführung durch eine Rotorblattwand.

Eine Durchführung in der Rotorblattwand dient beispielsweise als Durchgangsloch zur Montage von Bauteilen, die aus dem Inneren des Rotorblatts durch die Schale hindurch nach außen reichen. Solche Bauteile sind beispielsweise Rezeptoren für den Blitzschutz der Windenergieanlage, Querbolzen zur Befestigung des Rotorblatts, Mittel zur Gefahrkennzeichnung, Sensoren und Entwässerungseinrichtungen. Die Durchführung in der Rotorblattwand kann aber auch als Zugangsöffnung zum Einbringen oder Entnehmen von Gegenständen, wie beispielsweise Trimmgewicht, dienen oder sonstige Aufgaben haben.

Aus DE 103 24 166 B4 ist bekannt, im Bereich der Blattwurzel Durchgangslöcher vorzusehen, die quer zur Längsrichtung des Rotorblatts verlaufen. Für eine günstige Krafteinleitung von dem Querbolzen in das faserverstärkte Epoxidharz-Verbundmaterial des Rotorblatts wird vorgeschlagen, eine Querschnittserweiterung des Wandmaterials an der Blattwurzel vorzunehmen.

Aus WO 2005/026538 ist ein Blitzschutz für das Rotorblatt einer Windenergieanlage bekannt. Hierzu wird ein Blitzrezeptor durch eine Durchführung in der Schale des Rotorblatts geführt und im Innenraum des Rotorblatts geerdet. Um eine Schwächung des Faserverbundwerkstoffs in dem Rotorblatt zu vermeiden, wird vorgeschlagen, die Durchführung für den Blitzrezeptor so weit wie möglich in die Rotorblattspitze zu verlegen.

Der Erfindung liegt die technische Aufgabe zugrunde, eine Durchführung in einem Rotorblatt vorzusehen, die mit einfachen Mitteln eine Schwächung des Faserverbundwerkstoffs weitgehend vermeidet.

Erfindungsgemäß wird die Aufgabe durch ein Verfahren mit den Merkmalen aus Anspruch 1 gelöst. Ebenfalls wird die technische Aufgabe durch ein Rotorblatt mit den Merkmalen gemäß Anspruch 12 gelöst. Vorteilhafte Ausgestaltungen bilden die Gegenstände der Unteransprüche.

Bei dem erfindungsgemäßen Verfahren wird eine Durchführung in einem Faserverbundwerkstoff für ein Rotorblatt hergestellt. Besonders faserverstärkte Epoxidharz-Verbundmaterialien haben sich beispielsweise als leichte und dennoch robuste Werkstoffe für die Herstellung von Rotorblättern von Windenergieanlagen durchgesetzt. Bei dem erfindungsgemäßen Verfahren wird in einem ersten Schritt in einem Faserhalbzeug eine von Fasern freie Öffnung derart vorgesehen, daß die Fasern um die Öffnung herum verlaufen. Die Öffnung in dem Faserhalbzeug wird also nicht durch Ausstanzen, Schneiden oder andere Verfahren hergestellt, bei denen die Fasern an der Lochwandung durchtrennt werden. Vielmehr wird bei dem erfindungsgemäßen Verfahren in dem Faserhalbzeug eine Öffnung geschaffen, aus der die Fasern herausgedrängt sind.

Während der nachfolgenden Verarbeitung wird das Faserhalbzeug bei der Herstellung des Faserverbundwerkstoffs mit Matrixwerkstoff vergossen und zu dem Faserverbundwerkstoff verarbeitet. Die Durchführung wird dann nachfolgend durch die Öffnung in dem Faserhalbzeug eingebracht, beispielsweise durch Bohren oder Fräsen. Neben dem Einbringen der Durchführung in den Faserverbundwerkstoff kann alternativ vor dem Vergießen mit dem Matrixwerkstoff ein Körper in die Öffnung in dem Faserhalbzeug eingesetzt und mit dem Faserverbundwerkstoff eingearbeitet werden. Der besondere Vorteil des erfindungsgemäßen Verfahrens liegt darin, daß ein Durchtrennen und Verkürzen der Fasern für die Durchführung vermieden wird und so eine Schwächung des Materials unterbleibt. Die erfindungsgemäß hergestellte Durchführung besitzt eine hohe Lochleibungsfestigkeit.

In einer möglichen Ausgestaltung des erfindungsgemäßen Verfahrens wird die Durchführung in einen eingearbeiteten Hilfskörper gebohrt oder gefräst. Als Faserhalbzeug ist üblicherweise ein Gewebe, ein Gelege oder eine Fasermatte mit Fasern einer oder mehrerer Sorten vorgesehen. Der Hilfskörper kann auch aus dem Faserverbundwerkstoff wieder entfernt werden. Zweckmäßigerweise ist er hierzu entlang seinem Umfang mit einem Trennmittel versehen.

Zur Einbringung der Durchführung in das Faserhalbzeug wird bevorzugt ein zylindrisches oder kegelförmiges Werkzeug, nach Art eines Doms, verwendet, um die Durchführung in dem gewünschten Durchmesser zu bilden.

Rotorblätter sind bevorzugt in einer sogenannten Sandwich-Bauweise hergestellt. Dabei wird ein Kern beidseitig mit einem Faserverbundwerkstoff versehen. Der Kern besitzt ein Durchgangsloch, das ggf. den Körper aufnimmt. Die Durchführungen in dem Faserverbundwerkstoff sind mit dem Durchgangsloch in dem Kern ausgerichtet. Das Kernmaterial kann aus Kunststoff bestehen. Es ist jedoch auch möglich, andere Materialien, wie beispielsweise Holz, insbesondere Balsa-Holz, für den Kern zu verwenden.

Neben der Sandwich-Struktur aus Gelege, Kernmaterial, Gelege können auch Vollaminate vorgesehen werden. Das Vollaminat besteht aus mehreren Gelege, die miteinander laminiert werden.

Das erfindungsgemäße Rotorblatt ist zur Verwendung in einer Windenergieanlage vorgesehen. Die Durchführung erstreckt sich durch die Wand des Rotorblatts, die einen Faserverbundwerkstoff aufweist. Erfindungsgemäß verlaufen die Fasern in dem Faserverbundwerkstoff derart, daß eine von Fasern freie Öffnung gebildet ist. Die Wand des Rotorblatts besteht bevorzugt aus einem Kern, der beidseitig den Faserverbundwerkstoff trägt, wobei der Kern für die Durchführung ein Durchgangsloch besitzt. Bevorzugt ist in das Durchgangsloch in dem Kern ein Hilfskörper eingesetzt, dessen Material dem Material des Kerns entspricht.

In einer zweckmäßigen Ausgestaltung ist der Hilfskörper dicker als der Kern im Bereich seines Durchgangslochs ausgebildet. Auf diese Weise wird sichergestellt, daß beim Anbringen des Faserverbundwerkstoffs der Hilfskörper auch in die Durchführung des Faserhalbzeugs vorsteht. Hierdurch wird bei der Arbeit mit dem Matrixwerkstoff, beispielsweise einem Epoxidharz, sichergestellt, daß die Durchführung frei von Fasern bleibt. Bevorzugt steht der Hilfskörper auch geringfügig über den Faserverbundwerkstoff auf dem Kern über.

In einer besonders bevorzugten Ausgestaltung ist ein Blitzfänger in der Rotorwand vorgesehen, der in der Durchführung des Rotorblatts angeordnet und mit einer Erdung elektrisch leitend verbunden ist. Um eine Beschädigung von möglicherweise leitenden Fasern in dem Faserverbundwerkstoff zu vermeiden, ist der Blitzfänger in der Durchführung in einem Isolator angeordnet, wobei der Blitzfänger bis in den Innenraum des Rotorblatts ragt. Der Blitzfänger mündet bevorzugt in einen Blitzschutzkörper, der auf der Innenseite der Rotorblattwand angeordnet ist und eine Aufnahme für den Blitzfänger besitzt. Der Blitzschutzkörper ist über elektrische Leitungen geerdet.

Die erfindungsgemäße Durchführung wird nachfolgend anhand eines Beispiels näher erläutert. Es zeigt:
- Fign. 1a-f: unterschiedliche Ausrichtungen der Fasern in einem Gelege,
- Fig. 2: ein Rotorblatt im Querschnitt mit einer Blitzschutzeinrichtung,
- Fig. 3: einen Blitzrezeptor in der erfindungsgemäßen Durchführung und
- Fig. 4: eine Durchführung durch die Rotorblattwand.

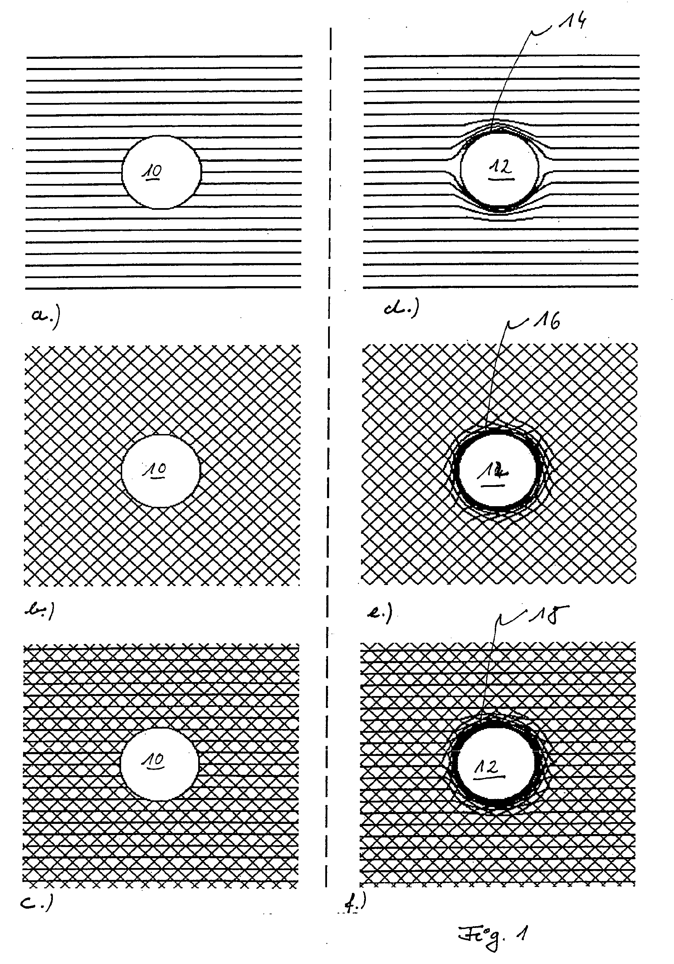

Fig. 1 zeigt auf der linken Seite unterschiedliche Fasergewebe, deren Fasern durch die nachträgliche Herstellung einer Durchführung 10 unterbrochen wurden.

Fig. 1a zeigt einen unidirektionalen (UD) Verlauf der Fasern, bei dem die Fasern im wesentlichen parallel verlaufen. Fig. 1b zeigt eine biaxiale Anordnung, bei der die Fasern in zwei senkrecht zueinander stehenden Vorzugsrichtungen verlaufen. Fig. 1c zeigt eine triaxiale Ausrichtung der Fasern, bei der die Fasern in drei Richtungen verlaufen. Allen Ausrichtungen der Fasern ist gemeinsam, daß durch die Durchführung 10 die Fasern in der Lochwandung unterbrochen werden. Die unterbrochenen Fasern können daher im Bereich des Durchbruchs die Kräfte nicht mehr aufnehmen, wodurch es zur lokalen Überhöhung der Kräfte im Material kommt. Diese erhöhte mechanische Belastung des Rotorblattmaterials verkürzt wiederum die voraussichtliche Lebensdauer des Rotorblatts. Im Gegensatz dazu sind bei den Ausgestaltungen gemäß Fig. 1 d-f die Fasern 14, 16, 18 lediglich aus der Öffnung heraus gedrängt. Die Fasern verlaufen um das Durchgangsloch 12 herum, ohne in dieses vorzustehen. In einem faserverstärkten Verbundmaterial führt der dargestellte Faserverlauf zu einer deutlich verbesserten Lochleibungsfestigkeit in der Rotorblattwand.

Fig. 1d zeigt wieder entsprechend zu Fig. 1a ein Fasergelege, bei dem die Fasern unidirektional im wesentlichen in eine Richtung verlaufen. Fig. 1e entspricht Fig. 1b und zeigt beispielhaft die verdichteten Fasern 16 in der Umgebung der Durchführung 12. Fig. 1f zeigt die triaxiale Ausrichtung der Fasern im Gewebe, die zu einer weiter erhöhten Verdichtung der Fasern 18 führt.

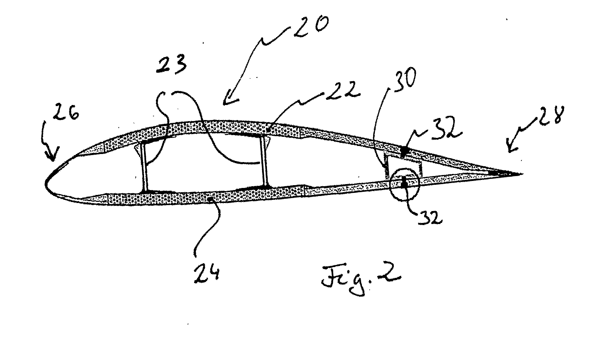

Fig. 2 zeigt beispielhaft einen Querschnitt durch ein Rotorblatt 20, mit einer Oberschale 22 und einer Unterschale 24. Die beiden Halbschalen 22, 24 sind im Bereich der Blattnase 26 und an der Rotorblatthinterkante 28 miteinander verbunden. Zwischen den Halbschalen 22 und 24 sind Stege 23 angeordnet, die das Rotorblatt stabilisieren.

Im hinteren Bereich des Rotorblatts ist zwischen die Halbschale 22 und die Halbschale 24 ein Blitzschutzkasten eingesetzt. Der Blitzschutzkasten 30 besteht aus Metall und ist über elektrische Leitungen (nicht dargestellt) geerdet.

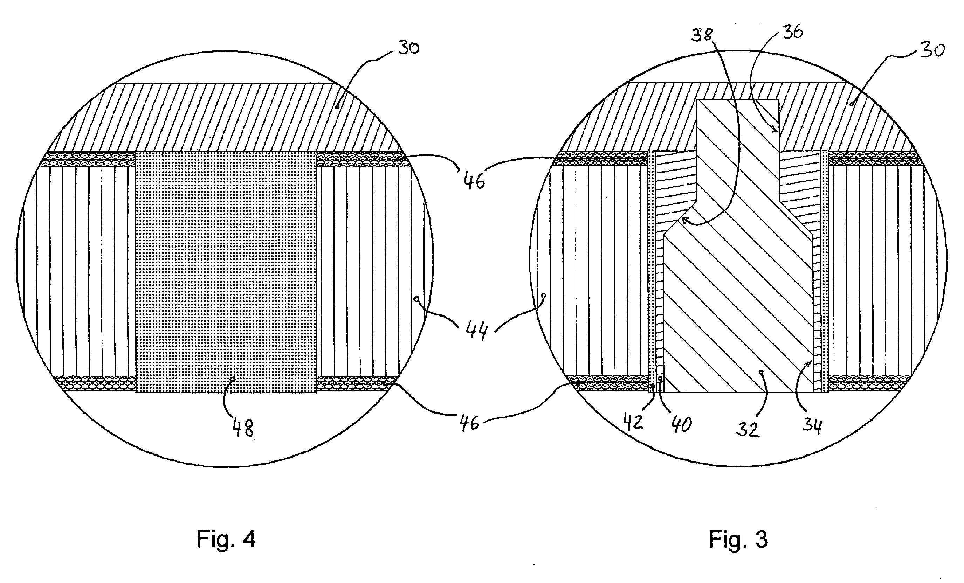

Der Blitzschutzkasten 30 ist mit Blitzrezeptoren 32 sowohl auf der Blattoberseite als auch auf der Unterseite verbunden. Fig. 3 zeigt eine Detailansicht des Blitzrezeptors 32 in der Rotorblattunterschale. Der aus Metall hergestellte Blitzrezeptor besitzt einen zylindrischen Körperabschnitt 34 und einen zweiten zylindrischen Körperabschnitt 36, der einen geringeren Durchmesser als der erste Körperabschnitt besitzt. Erster und zweiter Körperabschnitt sind über einen kegelförmigen Abschnitt 38 miteinander verbunden. Der Blitzrezeptor 32 ist in ein isolierendes Material 40 eingegossen und in seinem zweiten zylindrischen Abschnitt 36 mit dem Blitzschutzkörper 30 verbunden. Eingegossen ist das Isolatormaterial 40 in einen zylindrischen Mantelkörper 42. Der zylindrische Mantelkörper 42 wird von dem durchbohrten Hilfskörper gebildet. Der Kern 44 ist auf beiden Seiten mit einem faserverstärkten Kunststoffmaterial 46 versehen. Das faserverstärkte Kunststoffmaterial besteht aus einem Epoxidharz, der mit einem Fasergelege verstärkt wurde. Das Fasergelege weist dabei eine Durchführung auf, durch die der zylindrische Mantelkörper 42 und der Blitzrezeptor 32 vorstehen.

Fig. 4 zeigt zum besseren Verständnis den Aufbau der Rotorwand vor einem Einsetzen des Blitzrezeptors 32 in einer Detailansicht. Die Rotorblattwand besitzt ein Kernmaterial 44, das beidseitig mit einem faserverstärkten Verbundwerkstoff bedeckt ist. Der Kern 44 besitzt ein Durchgangsloch, in das ein Hilfskörper 48 eingesetzt ist. Der Hilfskörper 48 besteht aus vorzugsweise dem gleichen Material wie das Kernmaterial. Wird Holz als Material für den Kern verwendet, wird bevorzugt ein Kunststoffkörper als Hilfskörper 48 verwendet. Eingearbeitet ist der Hilfskörper 48 in den faserverstärkten Verbundwerkstoff 46.

Um nachfolgend das Isolatormaterial 40 und den Blitzrezeptor 32 einbringen zu können, wird in den eingearbeiteten Hilfskörper 48 eine Bohrung eingebracht, sodaß der zylindrische Mantelkörper 42 in dem Durchgangsloch des Kernmaterials verbleibt. Alternativ ist es auch möglich, den Hilfskörper 48 zu entfernen.

## Patentansprüche

1. Verfahren zur Herstellung einer Durchführung in einem Faserverbundwerkstoff für ein Rotorblatt, mit folgenden Verfahrensschritten:
- In einem Faserhalbzeug wird eine von Fasern freie Öffnung (12) derart vorgesehen, daß die Fasern um die Öffnung (12) herum verlaufen,
- das Faserhalbzeug wird durch die Zugabe eines Matrixwerkstoffs zu einem Faserverbundwerkstoff verarbeitet, und
- die Durchführung wird durch die Öffnung in dem Faserhalbzeug eingebracht.

2. Verfahren nach Anspruch 1, **dadurch gekennzeichnet, daß** in die freie Öffnung ein Körper vor der Zugabe des Matrixwerkstoffs eingesetzt wird.

3. Verfahren nach Anspruch 2, **dadurch gekennzeichnet, daß** der Körper in dem Faserverbundwerkstoff eingearbeitet wird.

4. Verfahren nach Anspruch 2 oder 3, **dadurch gekennzeichnet, daß** als Körper ein Hilfskörper vorgesehen ist, durch den die Durchführung gebohrt oder gefräst wird.

5. Verfahren nach Anspruch 2 oder 3, **dadurch gekennzeichnet, daß** als Körper ein Hilfskörper vorgesehen ist, der nach Zugabe des Matrixwerkstoffs aus dem Faserverbundwerkstoff entfernt wird.

6. Verfahren nach Anspruch 5, **dadurch gekennzeichnet, daß** der Körper auf seinem Umfang mit einem Trennmittel versehen ist.

7. Verfahren nach Anspruch 1, **dadurch gekennzeichnet, daß** die freie Öffnung mit dem Verbundwerkstoff vergossen wird und die Durchführung durch den Verbundwerkstoff gebohrt oder gefräst wird.

8. Verfahren nach einem der Ansprüche 1 bis 7, **dadurch gekennzeichnet, daß** als Faserhalbzeug ein Gewebe oder ein Gelege oder eine Fasermatte von Fasern einer oder mehrerer Sorten vorgesehen ist.

9. Verfahren nach einem der Ansprüche 1 bis 8, **dadurch gekennzeichnet, daß** ein kegelförmiges Werkzeug in das Faserhalbzeug eingebracht wird, um die Öffnung für den Hilfskörper herzustellen.

10. Verfahren nach einem der Ansprüche 1 bis 9, **dadurch gekennzeichnet, daß** ein Kern beidseitig mit dem Faserverbundwerkstoff versehen ist, wobei die Öffnungen in dem Faserhalbzeug auf beiden Seiten des Kerns deckungsgleich übereinander liegen.

11. Verfahren nach einem der Ansprüche 1 bis 9, **dadurch gekennzeichnet, daß** das Faserhalbzeug zu einem Vollaminat verarbeitet wird.

12. Rotorblatt für eine Windenergieanlage, mit einer Durchführung durch eine Rotorblattwand, die einen Faserverbundwerkstoff aufweist, **dadurch gekennzeichnet, daß** die Fasern in dem Faserverbundwerkstoff derart verlaufen, daß eine von Fasern freie Öffnung für die Durchführung vorgesehen ist.

13. Rotorblatt nach Anspruch 12, **dadurch gekennzeichnet, daß** die Wand des Rotorblatts einen Kern aufweist, der beidseitig den Faserverbundwerkstoff trägt, wobei der Kern für die Durchführung ein Durchgangsloch besitzt, das deckungsgleich mit den Öffnungen in dem Faserhalbzeug ist.

14. Rotorblatt nach Anspruch 13, **dadurch gekennzeichnet, daß** ein Körper in das Durchgangsloch in dem Kern eingesetzt ist.

15. Rotorblatt nach Anspruch 14, **dadurch gekennzeichnet, daß** die Durchführung als Bohrung durch den Körper verläuft.

16. Rotorblatt nach Anspruch 12, **dadurch gekennzeichnet, daß** die Rotorblattwand als ein Vollaminat aus Faserhalbzeug ausgebildet ist.

17. Rotorblatt nach einem der Ansprüche 12 bis 16, **dadurch gekennzeichnet, daß** mindestens ein Blitzfänger (32) in der Rotorblattwand vorgesehen ist, der in der Durchführung des Rotorblatts angeordnet und mit einer Erdung (30) elektrisch leitend verbunden ist.

18. Rotorblatt nach Anspruch 17, **dadurch gekennzeichnet, daß** der Blitzfänger in einem Isolatormaterial (40) angeordnet ist, wobei der Blitzfänger in den Innenraum des Rotorblatts vorsteht.

19. Rotorblatt nach Anspruch 17 oder 18, **dadurch gekennzeichnet, daß** der Blitzfänger (32) in einem Blitzschutzkörper mündet, der auf der Innenseite der Rotorblattwand angeordnet ist und eine Aufnahme für den in den Innenraum vorstehenden Blitzfänger (32) besitzt.

20. Rotorblatt nach Anspruch 19, **dadurch gekennzeichnet, daß** der Blitzschutzkörper (30) über elektrische Leitungen geerdet ist.
